# EUROPEAN PATENT APPLICATION

(11) **EP 4 775 601 A1**
(43) Date of publication of application: **15.07.2026**
(21) Application number: 24862703.6
(22) Date of filing: 29.08.2024
(51) Int. Cl.: C08F 2/44, C09D 11/101

(54) **ACTIVE ENERGY RAY-CURABLE COMPOSITION AND MULTILAYER BODY**

(30) Priority: 08.09.2023 JP 2023145706
(71) Applicant: artience Co., Ltd., Chuo-ku Tokyo 104-0031 (JP); Toyo Ink Co., Ltd., Tokyo 104-8378 (JP)
(72) Inventor: OKAMOTO, Kazuya, Tokyo 104-8378 (JP)
(74) Representative: SSM Sandmair
(86) International application number: PCT/JP2024/031069
(87) International publication number: WO 2025/053051

(57) **Abstract**

Provided is an active energy ray-curable composition, including: a (meth)acrylate compound (A); and a carboxylic acid or carboxylic acid anhydride (B) having a molecular weight of 500 or less and having no (meth)acryloyl group, wherein an amount contained of the carboxylic acid or carboxylic acid anhydride (B) having the molecular weight of 500 or less and having no (meth)acryloyl group is 3% by mass or less relative to a total amount of the composition.

## Description

### TECHNICAL FIELD

One embodiment of the present invention relates to an active energy ray-curable composition used for packages or the like, and more particularly, to an active energy ray-curable composition capable of providing clear printed matter (laminate having a printed layer).

### BACKGROUND ART

Since the active energy ray-curable ink is a solvent-free type, and very quickly cured and dried by active energy rays, it is possible to obtain high-quality printed matter having excellent environmental friendliness and printing workability. Therefore, it is widely used in the field of printed information, such as magazines and flyers, as well as the field of food packaging, such as paper containers.

In recent years, manpower savings, labor savings, automation, and speedups in printing have been demanded. In particular, printing speed has become faster and faster. There is a need for inks and varnishes that can stably provide high-quality printed matter over a long time without trouble under various printing conditions, and various ink improvements have been studied.

Patent Document 1 discloses an active energy ray-curable ink including a metal complex and a compound having a polar group. The disclosed ink has been evaluated for the presence of stains during printing, but clear printed matter demanded by the market has not been obtained.

### PRIOR ART DOCUMENTS

### PATENT DOCUMENTS

Patent Document 1: JP 2021-195503 A

### SUMMARY OF THE INVENTION

### PROBLEMS TO BE SOLVED BY THE INVENTION

The present invention provides an active energy ray-curable composition that has little deterioration in dot shapes, provides clear printed matter, and has excellent fluidity, and printed matter using the same.

### MEANS TO SOLVE THE PROBLEMS

As a result of intensive research, the inventors of the present invention discovered that the issue described above could be addressed by using an active energy ray-curable composition described below, and were thus able to complete the present invention.

In other words, embodiments of the present invention include the following.

However, the present invention is not limited to the following embodiments.
[1] An active energy ray-curable composition, including: a (meth)acrylate compound (A); and a carboxylic acid or carboxylic acid anhydride (B) having a molecular weight of 500 or less and having no (meth)acryloyl group, wherein
   an amount contained of the carboxylic acid or carboxylic acid anhydride (B) having the molecular weight of 500 or less and having no (meth)acryloyl group is 3% by mass or less relative to a total amount of the composition.
[2] The active energy ray-curable composition according to the above [1], wherein the carboxylic acid or carboxylic acid anhydride (B) having the molecular weight of 500 or less and having no (meth)acryloyl group has a cyclic hydrocarbon structure per molecule.
[3] The active energy ray-curable composition according to the above [1] or [2], wherein the carboxylic acid or carboxylic acid anhydride (B) having a molecular weight of 500 or less and having no (meth)acryloyl group contains one or more selected from the group consisting of a tertiary butylbenzoic acid, a benzoic acid, a methylbenzoic acid, a maleic anhydride, a 1,2,3,6-tetrahydrophthalic anhydride, a phthalic anhydride, a 1,4-cyclohexanedicarboxylic acid, an isophthalic acid, a terephthalic acid, an abietic acid, a dehydroabietic acid, and a trimellitic anhydride.
[4] The active energy ray-curable composition according to any one of the above [1] to [3], further including a resin (C).
[5] The active energy ray-curable composition according to any one of the above [1] to [4], further including a colorant (D).
[6] The active energy ray-curable composition according to the above [4] or [5], wherein an amount contained of the resin (C) is within a range from 2% to 40% by mass relative to a total amount of the composition.
[7] A laminate including: a substrate; and a layer formed from a cured product of the active energy ray-curable composition according to any one of the above [1] to [6].

This Application is related to the subject matter disclosed in prior Japanese Application 2023-145706, filed on September 8, 2023, the entire contents of which are incorporated by reference herein.

### EFFECTS OF THE INVENTION

The present invention provides an active energy ray-curable composition that has little deterioration in dot shapes, provides clear printed matter, and has excellent fluidity, and printed matter using the same.

### EMBODIMENTS FOR CARRYING OUT THE INVENTION

Embodiments of the present invention are described below in detail. However, the present invention is not limited to the embodiments described below, and various modifications can be made without departing from the summary of the present invention.

Terms used herein will be explained. "(Meth)acrylate" means an acrylate and/or a meta-acrylate. "Active energy ray" means an energy ray, such as an ultraviolet ray, which has a property of causing a chemical change, such as a chemical reaction in an irradiated substance. "PO" represents "propylene oxide", and "EO" represents "ethylene oxide".

### <(Meth)acrylate compound (A)>

An active energy ray-curable composition (hereinafter also referred to as "composition") according to an embodiment of the present invention contains a (meth)acrylate compound (A).

The (meth)acrylate compound (A) is a compound that has one or more (meth)acryloyl groups per molecule.

Specific examples of the (meth)acrylate compound (A) include the following:
monofunctional (meth)acrylate compounds having one (meth)acryloyl group such as 2-ethylhexyl(meth)acrylate, 2-hydroxyethyl(meth)acrylate, 2-hydroxypropyl(meth)acrylate, β-carboxyethyl(meth)acrylate, 4-tert-butylcyclohexanol(meth)acrylate, tetrahydrofurfuryl acrylate, alkoxylated tetrahydrofurfuryl acrylate, caprolactone(meth)acrylate, lauryl(meth)acrylate, stearyl(meth)acrylate, isoamyl(meth)acrylate, 2-phenoxyethyl(meth)acrylate, isodecyl(meth)acrylate, 3,3,5-trimethylcyclohexanol(meth)acrylate, cyclohexyl(meth)acrylate, isobornyl(meth)acrylate, norbornyl(meth)acrylate, dicyclopentanyl(meth)acrylate, dicyclopentenyl(oxyethyl)(meth)acrylate, 1,4-cyclohexanedimethanol(meth)acrylate, cyclic trimethylolpropane formal(meth)acrylate, benzyl(meth)acrylate, EO-modified(2)nonylphenol acrylate, (2-methyl-2-ethyl-1,3-dioxolane-4-yl)methyl acrylate, and acryloyl morpholine;
bifunctional (meth)acrylate compounds having two (meth)acryloyl groups such as 1,3-butylene glycol di(meth)acrylate, 1,4-butanediol di(meth)acrylate, 3-methyl-1,5-pentanediol di(meth)acrylate, 1,6-hexanediol di(meth)acrylate, 1,9-nonanediol di(meth)acrylate, 1,10-decanediol di(meth)acrylate, 1,2-dodecanediol di(meth)acrylate, neopentyl glycol di(meth)acrylate, polyethylene glycol (200) di(meth)acrylate, polyethylene glycol (300) di(meth)acrylate, polyethylene glycol (400) di(meth)acrylate, polyethylene glycol (600) di(meth)acrylate, hydroxypivalic acid neopentyl glycol di(meth)acrylate, dipropylene glycol di(meth)acrylate, tripropylene glycol di(meth)acrylate, EO-modified (2) 1,6-hexanediol di(meth)acrylate, PO-modified (2) neopentyl glycol di(meth)acrylate, (neopentyl glycol modified)trimethylolpropan di(meth)acrylate, dimethyloltricyclodecan di(meth)acrylate, EO-modified (4) bisphenol A di(meth)acrylate, PO-modified (4) bisphenol A di(meth)acrylate, cyclohexanedimethanol di(meth)acrylate, dimethylole-tricyclodecan di(meth)acrylate, dicyclopentanyl di(meth)acrylate, and tris(2-hydroxyethyl)isocyanurate di(meth)acrylate;
trifunctional(meth)acrylate compounds having three (meth)acryloyl groups such as trimethylolpropane tri(meth)acrylate, EO-modified (3) trimethylolpropane tri(meth)acrylate, PO-modified (3) trimethylolpropane tri(meth)acrylate, ε-caprolactone modified tris-(2-acryloxyethyl) isocyanurate, ethoxylated isocyanuric acid tri(meth)acrylate, tris(2-hydroxyethyl)isocyanurate tri(meth)acrylate, pentaerythritol tri(meth)acrylate, and PO-modified (3) glycerol triacrylate;
quadrafunctional (meth)acrylate compounds having four (meth)acryloyl groups such as pentaerythritol tetra(meth)acrylate, and ditrimethylolpropane tetra(meth)acrylate;
pentafunctional (meth)acrylate compounds having five (meth)acryloyl groups such as dipentaerythritol penta(meth)acrylate; and
hexafunctional (meth)acrylate compounds having six (meth)acryloyl groups such as dipentaerythritol hexa(meth)acrylate.

Urethane acrylate, polyester acrylate, epoxy acrylate, and the like can also be used as the (meth)acrylate compound (A).

The urethane acrylate may be, for example, one obtained by reacting a diisocyanate with a (meth)acrylate having a hydroxy group, or one obtained by reacting an isocyanate group-containing urethane prepolymer, which is obtained by reacting a polyol with a polyisocyanate under conditions that provide excess isocyanate groups, with a (meth)acrylate having a hydroxy group. Alternatively, it may be obtained by reacting a hydroxy group-containing urethane prepolymer, which is obtained by reacting a polyol with a polyisocyanate under conditions that provide excess hydroxy groups, with a (meth)acrylate having an isocyanate group.

The polyester acrylate may be, for example, obtained by reacting a polyester polycarboxylic acid, which is obtained through polycondensation of a polybasic acid and a polyhydric alcohol, with a hydroxy group-containing (meth)acrylate or the like.

An example of the epoxy acrylate is one obtained by esterifying a glycidyl group of an epoxy resin with a (meth)acrylic acid and having a functional group as a (meth) acrylate group, which contains (meth)acrylic acid adducts to a bisphenol A type epoxy resin, and (meth)acrylic acid adducts to a novolak type epoxy resin.

The (meth)acrylate compound (A) may be used alone, or a combination of two or more types thereof may be used. In some embodiments, the (meth)acrylate compound (A) is preferably a (meth)acrylate compound having two or more (meth)acryloyl groups, and more preferably a (meth)acrylate compound having three or more (meth)acryloyl groups.

In some embodiments, the (meth)acrylate compound (A) preferably contains at least one selected from the group consisting of tripropylene glycol di(meth)acrylate, EO-modified (3) trimethylolpropane tri(meth)acrylate, PO-modified (3) trimethylolpropane tri(meth)acrylate, PO-modified (3) glycerol triacrylate, ditrimethylolpropan tetra(meth)acrylate, and dipentaerythritol hexa(meth)acrylate, and more preferably contains two or more thereof.

In some embodiments, the (meth)acrylate compound (A) preferably contains two or more selected from the group consisting of EO-modified (3) trimethylolpropane tri(meth)acrylate, PO-modified (3) trimethylolpropane tri(meth)acrylate, PO-modified (3) glycerol triacrylate, ditrimethylolpropane tetra(meth)acrylate, and dipentaerythritol hexa(meth)acrylate.

In particular, the above (meth)acrylate compound (A) preferably contains at least one selected from the group consisting of EO-modified (3) trimethylolpropane tri(meth)acrylate, PO-modified (3) trimethylolpropane tri(meth)acrylate, and PO-modified (3) glycerol triacrylate, and at least one selected from the group consisting of ditrimethylolpropane tetra(meth)acrylate and dipentaerythritol hexa(meth)acrylate. In some embodiments, the (meth)acrylate compound (A) preferably contains EO-modified (3) trimethylolpropane tri(meth)acrylate and ditrimethylolpropane tetra(meth)acrylate.

The amount contained of the (meth)acrylate compound (A) is, relative to the total amount of the composition, preferably within a range from 20% to 95% by mass, and more preferably from 25% to 90% by mass, from the viewpoint of curability.

### <Carboxylic acid or carboxylic acid anhydride (B) having a molecular weight of 500 or less and having no (meth)acryloyl group>

In a composition of the present embodiment, the amount contained of the carboxylic acid or carboxylic acid anhydride (B) having a molecular weight of 500 or less and having no (meth)acryloyl group is 3% by mass or less relative to the total amount of the composition.

In the present embodiment, the carboxylic acid or carboxylic acid anhydride (B) having a molecular weight of 500 or less and having no (meth)acryloyl group may be specifically a compound having one or more carboxylic acids, described below.

Examples of the compound having one carboxylic acid include: aromatic monobasic acids such as benzoic acids, methylbenzoic acids, tertiary butylbenzoic acids, naphthoic acids, and orthobenzoylbenzoic acids; resin acids such as abietic acids, neoabietic acids, parastolic acids, dehydroabietic acids, pimaric acids, isopimaric acids, sandalacopimaric acids, and comunic acids; stearic acids; palmitic acids; oleic acids; and linoleic acids.

Examples of the compound having two or more carboxylic acids include 1,2,3,6-tetrahydrophthalic acids, 3-methyl-1,2,3,6-tetrahydrophthalic acids, 4-methyl-1,2,3,6-tetrahydrophthalic acids, 1,2-cyclohexanedicarboxylic acids, 1,3-cyclohexanedicarboxylic acids, 1,4-cyclohexanedicarboxylic acids, oxalic acids, malonic acids, succinic acids, glutaric acids, pimelic acids, sebacic acids, azelaic acids, alkenylsuccinic acids such as dodecenylsuccinic acids and pentadecenylsuccinic acids, o-phthalic acids, terephthalic acids, isophthalic acids, trimellitic acids, pyromellitic acids, maleic acids, fumaric acids, citraconic acids, itaconic acids, crotonic acids, isocrotonic acids, dihydroagato acids, and their anhydrides.

For the carboxylic acid or carboxylic acid anhydride (B) having a molecular weight of 500 or less and having no (meth)acryloyl group, one of the above compounds may be used alone, or a combination of two or more of the above compounds may be used.

When the molecular weight of the above compound is 500 or less, clarity of printed paper can be achieved without impairing fluidity of the composition. In some embodiments, the molecular weight of the above compound may be 400 or less, 350 or less, or 300 or less. In some embodiments, the molecular weight of the above compound may be 284.5 or less. Although not particularly limited, the molecular weight of the above compound above may be 50 or more.

Furthermore, from the viewpoint of fluidity of the composition and clarity of printing, the carboxylic acid or carboxylic acid anhydride (B) having a molecular weight of 500 or less and having no (meth)acryloyl group preferably contains a carboxylic acid compound having a cyclic hydrocarbon in its structure (per molecule). The cyclic hydrocarbon structure may be either an aromatic ring or an alicyclic structure.

Among carboxylic acid compounds having a cyclic hydrocarbon structure per molecule, examples of a compound having one carboxylic acid include: aromatic monobasic acids such as benzoic acids, methylbenzoic acids, tertiary butylbenzoic acids, naphthoic acid, and orthobenzoylbenzoic acids; and resin acids such as abietic acids, neoabietic acids, parastolic acids, dehydroabietic acids, pimaric acids, isopimaric acids, sandalacopimaric acids, and comunic acids. Thereamong, at least one compound selected from the group consisting of a benzoic acid, a methylbenzoic acid, a tertiary butylbenzoic acid, an abietic acid, and a dehydroabietic acid can be favorably used.

Among carboxylic acid compounds having a cyclic hydrocarbon structure per molecule, examples of a compound having two or more carboxylic acids include: 1,2,3,6-tetrahydrophthalic acids, 3-methyl-1,2,3,6-tetrahydrophthalic acids, 4-methyl-1,2,3,6-tetrahydrophthalic acids, 1,2-cyclohexanedicarboxylic acids, 1,3-cyclohexanedicarboxylic acids, 1,4-cyclohexanedicarboxylic acids, o-phthalic acids, terephthalic acids, isophthalic acids, trimellitic acids, pyromellitic acids, maleic acids, fumaric acids, dihydroagatic acids, and their anhydrides. Among them, at least one selected from the group consisting of maleic anhydride, 1,2,3,6-tetrahydrophthalic anhydride, phthalic anhydride, a 1,4-cyclohexanedicarboxylic acid, an isophthalic acid, a terephthalic acid, and a trimellitic anhydride can be favorably used.

In some embodiments, from the viewpoint of compatibility with (meth)acrylate compounds and clarity of printing, the carboxylic acid or carboxylic acid anhydride (B) having a molecular weight of 500 or less and having no (meth)acryloyl group is preferably a carboxylic acid compound having a cyclic hydrocarbon structure per molecule. The above carboxylic acid compound having the cyclic hydrocarbon structure preferably contains one or more selected from the group consisting of a tertiary butylbenzoic acid, a benzoic acid, a methylbenzoic acid, an abietic acid, a dehydroabietic acid, a maleic anhydride, a 1,2,3,6-tetrahydrophthalic anhydride, a phthalic anhydride, a 1,4-cyclohexanedicarboxylic acid, an isophthalic acid, a terephthalic acid, and trimellitic anhydride. More preferably, the above carboxylic acid compound having the cyclic hydrocarbon structure contains one or more selected from the group consisting of a benzoic acid, an abietic acid, a dehydroabietic acid, a maleic anhydride, a 1,2,3,6-tetrahydrophthalic anhydride, a phthalic anhydride, an isophthalic acid, and a terephthalic acid.

In some embodiments, the above carboxylic acid compound having the cyclic hydrocarbon structure may be a compound having one carboxylic acid, of which a benzoic acid, an abietic acid, and a dehydroabietic acid are preferable, and a benzoic acid and a dehydroabietic acid are more preferable. In some embodiments, the above carboxylic acid compound having the cyclic hydrocarbon structure may be a compound having two or more carboxylic acids, of which a 1,2,3,6-tetrahydrophthalic anhydride and a phthalic anhydride are preferable.

The amount contained of the carboxylic acid or carboxylic acid anhydride (B) having a molecular weight of 500 or less and having no (meth)acryloyl group is 3% by mass or less relative to the total amount of the composition. When the amount exceeds 3% by mass, compatibility with the (meth)acrylate compound (A) tends to deteriorate, and flowability tends to deteriorate.

The amount contained of the carboxylic acid or carboxylic acid anhydride (B) having a molecular weight of 500 or less and having no (meth)acryloyl group may be 0.0005% by mass or more, 0.001% by mass or more, or 0.003% by mass or more, and may be 3% by mass or less, 2% by mass or less, or 1% by mass or less. The amount contained of the above (B) is preferably within a range from 0.001% by mass to 2% by mass, and more preferably from 0.003% by mass to 1% by mass.

By adjusting the amount contained of the above (B) to the above ranges, fluidity and clarity of printed matter become favorable. While not constrained by theory, when the carboxylic acid or carboxylic acid anhydride (B) having a molecular weight of 500 or less and having no (meth)acryloyl group is present in the composition in the above ranges, it is presumed that it affects the compatibility of the (meth)acrylate compound (A) and functions to improve cohesion of ink. When the cohesion of ink is developed during printing, it works preferably to improve dot gain, and it becomes easy to obtain clear printed matter.

### <Resin (C)>

The composition of the present embodiment preferably contains a resin (C). By including the resin (C), fluidity becomes favorable.

In the present embodiment, the resin (C) preferably has excellent compatibility with a (meth)acrylate compound. Specific examples of the resin (C) include diallylphthalate resins, rosin-modified resins, polyvinyl chloride, poly(meth)acrylic acid esters, epoxy resins, polyester resins, polyurethane resins, cellulose derivatives (e.g., ethylcellulose, cellulose acetate, nitrocellulose), vinyl chloride-vinyl acetate copolymers, polyamide resins, polyvinyl acetal resins, alkyd resins, petroleum resins, urea resins, and synthetic rubber such as butadiene-acrylonitrile copolymers.

Thereamong, it is preferable to use one or more selected from the group consisting of a diallylphthalate resin, a rosin-modified resin, an epoxy resin, a polyester resin, a polyurethane resin, an alkyd resin, and a petroleum resin from the viewpoint of fluidity.

From the viewpoint of fluidity of the active energy ray-curable composition, the amount contained of the resin (C) is, relative to the total amount of the composition, preferably within a range from 2% to 40% by mass, and more preferably from 3% to 30% by mass. In some embodiments, the amount contained of the resin (C) may be, relative to the total amount of the composition, within a range from 10% to 30% by mass, and more preferably from 10% to 20% by mass.

From the viewpoint of compatibility with the (meth)acrylate compound, and from the viewpoint of fluidity, the weight average molecular weight of the resin (C) is preferably within a range from 1,000 to 50,000, and more preferably from 1,500 to 40,000.

### <Colorant (D)>

It is also possible to use a colorant (D) in the composition of the present embodiment.

At least one of a pigment or a dye can be used as the colorant (D), and it is preferable to use a pigment from the viewpoint of light resistance.

In the present embodiment, there are no particular limitations to the pigment, and known pigments can be used. As the pigment, both inorganic and organic pigments can be used.

Examples of the inorganic pigment include carbon blacks such as furnace black, lamp black, acetylene black, and channel black, iron oxides, and titanium oxides.

Examples of the organic pigment include: soluble azo pigments including β-naphthol-based, β-oxynaphthoic acid-based, β-oxynaphthoic acid-based anilide-based, acetoacetic acid anilide-based, and pyrazolone-based; insoluble azo pigments including β-naphthol-based, β-oxynaphthoic acid-based anilide-based, acetoacetic acid anilide-based monoazo, acetoacetic acid anilide-based disazo, and pyrazolone-based; phthalocyanine-based pigments including copper phthalocyanine blue, halogenated (e.g., chlorinated or brominated) copper phthalocyanine blue, sulfonated copper phthalocyanine blue, and metal-free phthalocyanine; polycyclic pigments and heterocyclic pigments such as quinacridone-based, dioxazine-based, threne-based (pyrantrone, anthantrone, indantrone, anthrapyrimidine, flavantrone, thioindigo-based, anthraquinone-based, perinone-based, perylene-based, etc.), isoindolinone-based, metal complex-based, quinophthalone-based, and diketopyrrolopyrrole-based.

More specifically, according to C. I. color index, examples of black pigments include C. I. Pigment Black 1, 6, 7, 9, 10, 11, 28, 26, and 31.

Examples of white pigments include C. I. Pigment White 5, 6, 7, 12, and 28.

Examples of yellow pigments include C. I. Pigment Yellow 1, 2, 3, 12, 13, 14, 16, 17, 18, 24, 73, 74, 75, 83, 93, 95, 97, 98, 100, 108, 109, 110, 114, 120, 128, 129, 138, 139, 174, 150, 151, 154, 155, 167, 180, 185, and 213.

Examples of blue or cyan pigments include C. I. Pigment Blue 1, 2, 14, 15, 15:1, 15:2, 15:3, 15:4, 60, and 62.

Examples of red or reddish pigments include C. I. Pigment RED 1, 3, 5, 19, 21, 22, 31, 38, 42, 43, 48:1, 48:2, 48:3, 48:4, 48:5, 49:1, 50, 52, 53:1, 57:1, 57:2, 58:4, 63:1, 81, 81:1, 81:2, 81:3, 81:4, 83, 90, 104, 108, 112, 114, 122, 144, 146, 148, 149, 150, 166, 168, 169, 170, 172, 173, 176, 177, 178, 184, 185, 187, 193, 202, 209, 214, 242, 254, 255, 264, 266, 269, and C. I. Pigment Violet 19.

Examples of green pigments include C. I. Pigment Green 1, 2, 3, 4, 7, 8, 10, 15, 17, 26, 36, 45, and 50.

Examples of purple pigments include C. I. Pigment Violet 1, 2, 3, 4, 5:1, 12, 13, 15, 16, 17, 19, 23, 25, 29, 31, 32, 36, 37, 39, and 42.

Examples of orange pigments include C. I. Pigment Orange 13, 16, 20, 34, 36, 38, 39, 43, 51, 61, 63, 64, and 74.

In the present invention, one of the above pigments may be used alone, or a combination of two or more may be used.

In the present embodiment, the colorant may be used in any amount as long as a desired concentration is reproducible, and is preferably within a range from 5% to 60% by mass relative to the total mass of the composition.

### <Fine particles>

The composition of the present embodiment may further contain fine particles. When fine particles are used, it is possible to add effects such as adjusting fluidity of the composition, preventing misting, and preventing penetration into printing substrates, such as paper. The fine particles may be ones of an extender pigment, silicone, or glass beads, and an extender pigment can be favorably used.

### (Extender pigment)

Specific examples of the extender pigment include lime carbonate powder, sedimentable calcium carbonate, sedimentable barium sulfate, gypsum, China Clay, titanium oxide, silica, diatomaceous earth, talc, kaolin, alumina white, barium sulfate, aluminum stearate, calcium stearate, calcium carbonate, magnesium carbonate, barite powder, and grinding powder. The extender pigment can also be used as a white pigment (colorant).

In the present embodiment, the amount contained of the extender pigment is not particularly limited. Any amount contained of the extender pigment can be used as long as it is possible to add a desired effect such as adjusting flowability, preventing misting, and preventing penetration into printing substrates, such as paper. In some embodiments, the amount contained of the extender pigment is preferably within a range from 0.1% to 10% by mass relative to the total mass of the composition.

### <Additives>

The composition of the present embodiment may further include various additives such as an anti-friction agent, a blocking inhibitor, and a slip agent according to the purpose. The various additives may be added to the composition using a conventional method.

When the various additives are added to the composition, it is preferable to adjust the blend amount of the additives within a range that does not impair the effects of other materials. The blend amount of the additives is preferably 20% by mass or less relative to the total amount of the composition.

### <Photopolymerization initiator>

The composition of the present embodiment may include a photopolymerization initiator. The polymerization initiator in the present invention may be any compound which generates a chemical change and generates radicals through the action of light or interaction with an electronically excited state of a sensitizing dye. In particular, it is preferable to use a photoradical polymerization initiator from the viewpoint that polymerization can be initiated by means of exposure to light.

The photopolymerization initiator that can be used in the present embodiment is not particularly limited, and any known photopolymerization initiator can be used. Specific examples include benzophenone-based compounds, dialkoxyacetophenone-based compounds, α-hydroxyalkylphenone-based compounds, α-aminoalkylphenone-based compounds, acylphosphine oxide-based compounds, and thioxanthone-based compounds.

One photopolymerization initiator may be used alone, or a combination of two or more may be used.

Examples of the above benzophenone-based compounds include benzophenone, 4-methylbenzophenone, 4-phenylbenzophenone, 4,4'-bis(diethylamino)benzophenone, 4,4'-bis(dimethylamino)benzophenone, and [4-(methylphenylthio)phenyl]-phenylmethanone.

Examples of the dialkoxyacetophenone-based compounds include 2,2-dimethoxy-2-phenylacetophenone, dimethoxyacetophenone, and diethoxyacetophenone.

Examples of the above α-hydroxyalkylphenone-based compounds include 1-hydroxy-cyclohexylphenyl ketone, 2-hydroxy-2-methyl-1-phenyl-propane-1-one, 1-[4-(2-hydroxymethoxy)-phenyl]-2-hydroxy-2-methyl-1-propane-1-one, and 2-hydroxy-1-{4-[4- (2-hydroxy-2-methyl-propionyl)-benzyl]phenyl}-2-methyl-propane-1-one.

Examples of the above α-aminoalkylphenone-based compounds include 2-methyl-1-[4-(methoxythio)-phenyl]-2-morpholinopropane-1-one, 2-benzyl-2-dimethylamino-1- (4-morpholinophenyl)-butanone-1, and 2-dimethylamino-2-(4-methylbenzyl)-1-(4-morpholine - 4-yl-phenyl)-butane-1-one.

Examples of the above acylphosphine oxide-based compounds include diphenylacylphenylphosphine oxide, 2,4,6-trimethylbenzoyl-diphenylphosphine oxide, bis(2,4,6-trimethylbenzoyl)-phenylphosphine oxide, 2,4,6-trimethylbenzoyl-bis(4-methylphenyl)phosphine oxide, and ethoxyphenyl(2,4,6-trimethylbenzoyl)phosphine oxide.

Examples of the above thioxanthone-based compounds include 2-isopropylthioxanthone, 2,4-dimethylthioxanthone, and 2,4-diethylthioxanthone.

The amount contained of the photopolymerization initiator is, relative to the total amount of the composition (ink), preferably within a range from 1% to 20% by mass, and more preferably from 5% to 15% by mass. In some embodiments, the photopolymerization initiator preferably contains an α-aminoalkylphenone-based compound, and a thioxanthone-based compound. The photopolymerization initiator preferably contains, for example, 2-dimethylamino-2-(4-methylbenzyl)-1-(4-morpholine-4-yl-phenyl)-butane-1-one, and 2,4-diethylthioxanthone.

When the composition of the present embodiment is cured through irradiation with ultraviolet light, it is only necessary to add a photopolymerization initiator to the composition, but a photosensitizer can be used in combination to further improve curability.

Examples of the photosensitizer include amines such as triethanolamines, methyldiethanolamines, dimethylethanolamines, triisopropanolamines, methyl-4-dimethylaminobenzoate, ethyl-4-dimethylaminobenzoate, isoamyl-4-dimethylaminobenzoate, (2-dimethylamino) ethyl benzoate, (n-butoxy)ethyl-4-dimethylaminobenzoate, and 2-ethylhexyl-4-dimethylaminobenzoate.

### <Photopolymerization inhibitor>

The composition of the present embodiment may include a photopolymerization inhibitor. By including the photopolymerization inhibitor, excellent storage stability can be achieved.

In the present embodiment, the photopolymerization inhibitor preferably contains one selected from the group consisting of a nitroso-based compound, a phenol-based compound, a quinone-based compound, and a piperidine-based compound from the viewpoint of storage stability.

Examples of the nitroso-based compound contains nitrosobenzene, aluminum N-nitrosophenylhydroxylamine, tri-p-nitrophenylmethyl, picric acids, cuperone, butylardoxime, methylethylketoxime, and cyclohexanone oxime.

Examples of the phenolic-based compound include (alkyl)phenol, p-methoxyphenol, o-isopropylphenol, catechol, resorcin, t-butylcatechol, pyrogallol, dibutylcresol, and guaiacol.

Examples pf the quinone-based compound include hydroquinone, t-butylhydroquinone, p-benzoquinone, and 2,5-di-tert-butyl-p-benzoquinone.

An example of the piperidine-based compound is phenothiazine.

In the present embodiment, a photopolymerization inhibitor other than the above-mentioned nitroso-based compounds, phenol-based compounds, quinone-based compounds, and piperidine-based compounds (also referred to as "other photopolymerization inhibitor") can also be used together. Specific examples of the other photopolymerization inhibitor include 1,1-picrylhydrazyl, dithiobenzoyl disulfide, N-(3-oxyanilino-1,3-dimethylbutylidene)aniline oxide, and cyclohexanone oxime cresol.

The amount contained of the photopolymerization inhibitor is, relative to the total mass of the composition, preferably within a range from 0.05% to 5.0% by mass, and more preferably from 0.1% to 1.0% by mass.

The active energy ray-curable composition of the present embodiment preferably does not substantially contain an organic solvent. In this specification, "does not substantially contain" means that there is no intentional addition, and the amount contained due to unintentional addition is less than 1% by mass. The unintentional addition includes a case of a small amount contained in each raw material, and a case of contamination in a manufacturing process of the composition and a production process of printed matter.

Typical organic solvents used as viscosity adjusters for printing inks may include MOSH/MOAH, which are persistent organic pollutants. Furthermore, since the absence of volatile components (non-VOC) can be expected to reduce environmental impact and improve work safety, it is preferable that the composition according to one embodiment of the present invention does not substantially contain an organic solvent.

### <Laminate>

One embodiment of the present invention relates to a laminate having a substrate and a layer formed from a cured product of the composition of the above embodiment. The laminate of the present embodiment is obtained by forming a printed layer on a substrate by printing or coating the above-described composition of the present embodiment, and then curing the printed layer using active energy rays.

In this specification, typical active energy rays include ultraviolet rays, electron rays, ionizing radiation such as X-rays, α-rays, β-rays, and γ-rays, microwaves, and high frequencies. However, active energy rays are not limited to these, and any energy species may be used as long as radical active species can be generated, including visible rays, infrared rays, and laser rays.

Examples of sources of ultraviolet rays include LEDs, ultra-high-pressure mercury lamps, high-pressure mercury lamps, medium-pressure mercury lamps, low-pressure mercury lamps, metal halide lamps, xenon lamps, carbon arc lamps, helium-cadmium lasers, YAG lasers, excimer lasers, and argon lasers.

There are no particular limitations on the substrate, which can be used for a laminate of the present embodiment, and known materials can be used. Specific examples of the structure include: coated paper such as art paper, coated paper, and cast paper; uncoated paper such as high-quality paper, medium-quality paper, and newsprint paper; synthetic paper such as Yupo paper; plastic films such as PET (polyethylene terephthalate), PP (polypropylene), and OPP (biaxially stretched polypropylene); metal foils; and metal plates used for containers, such as cans.

In some embodiments, the substrate may be paper, such as fine paper, coated paper, art paper, imitation paper, thin paper, and thick paper, a variety of synthetic paper, or the like, used for printing catalogues, posters, flyers, CD jackets, direct mail, pamphlets, and packages of cosmetics, beverages, pharmaceuticals, toys, devices, and the like. In some embodiments, the substrate may be a film, a sheet, or a cellophane of a polyester resin, an acrylic resin, a vinyl chloride resin, a vinylidene chloride resin, polyvinyl alcohol, polyethylene, polypropylene, polyacrylonitrile, an ethylene vinyl acetate copolymer, an ethylene vinyl alcohol copolymer, an ethylene methacrylate copolymer, nylon, a polylactic acid, or polycarbonate.

In some embodiments, the substrate may be a metal plate such as metal foil including aluminum foil, steel, copper, stainless, stainless steel, aluminum, a tin-plated steel sheet, and tin free steel, and may be a metal base plate having a base coat (primer) layer provided on the metal plate.

Methods for printing or coating the composition of the present embodiment on a substrate include roll coaters, gravure coaters, flexo coaters, air doctor coaters, blade coaters, air knife coaters, squeeze coaters, impregnated coaters, transfer roll coaters, kiss coaters, curtain coaters, cast coaters, spray coaters, die coaters, offset printing (normal lithographic printing using dampening water, and waterless lithographic printing without dampening water), flexo printing, gravure printing, screen printing, and the like. Thereamong, from the viewpoint of manufacturing printed matter in the field of packaging, etc., methods such as offset printing, flexographic printing, gravure printing, and screen printing are preferable. In these printing methods, the composition of the present embodiment can be favorably used as a printing ink.

The composition of the present embodiment can be favorably used to form a printed layer on various substrates, and can provide printed matter such as a variety of printed matter for books, a variety of printed matter for packaging including paper, a variety of plastic printed matter, printed matter for seals / labels, art printed matter, and metal printed matter (art printed matter, beverage can printed matter, and food printed matter, such as canned food).

In some embodiments, the composition of the present embodiment can be used as a top coat for printed matter requiring high gloss, heat resistance, scratch resistance, and the like. A layer (cured layer) formed from a cured product of the composition of the present embodiment has excellent heat resistance and excellent scratch resistance. Therefore, it can be favorably used to form printed layers, such as decorative boxes, paper containers, labels, catalogs, shopping bags, covers of book, and posters used for packages of food, medicine, cosmetics, and the like, which require labeling immediately after high-temperature filling treatment, and require resistance to label abrasion due to transportation during a filling line process and distribution.

### EXAMPLES

Hereinafter, the present invention will be described more specifically with reference to examples, but the present invention is not limited by these examples. Note that in this specification, "parts" means parts by mass, and "%" means % by mass.

### (Varnish production example 1)

In a 4-neck flask equipped with an agitator, a Dean-Stark tube, a thermometer, and a gas inlet tube, 35 parts of DAISO DAP A (weight average molecular weight 30,000, manufactured by OSAKA SODA CO., LTD.), 10 parts of MIRAMER M600 (dipentaerythritolhexaacrylate manufactured by Miwon Specialty Chemical Co., Ltd.), and 55 parts of LAROMER LR8863 (trimethylolpropane EO-modified (3) triacrylate, manufactured by BASF Corporation) were placed, and the mixture was heated to 100°C while stirring, and stirred to melt at 100°C for 2 hours to obtain DAISO DAP A varnish.

### (Varnish production example 2)

In a 4-neck flask equipped with an agitator, a Dean-Stark tube, a thermometer, and a gas inlet tube, 50 parts of Petrotack 90 (weight average molecular weight 1,600, manufactured by Tosoh Corporation), 30 parts of MIRAMER M360 (trimethylolpropane PO-modified (3) triacrylate manufactured by Miwon Specialty Chemical
Co., Ltd.), and 20 parts of MIRAMER M220 (tripropylene glycol diacrylate manufactured by Miwon Specialty Chemical Co., Ltd.) were placed, and the mixture was heated to 100°C while stirring, and stirred to melt at 100°C for 2 hours to obtain Petrotack 90 varnish.

According to compositions of table 1, active energy ray-curable compositions of examples 1 to 68, and comparative examples 1 to 8 were obtained by kneading in a three-roll mill. Evaluation results of the obtained active energy ray-curable compositions are also listed in Table 1.

### [Table 1]

**Table 1**

| | | | | Mw | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|---|---|
| Composition | Carboxylic acid or carboxylic acid anhydride (B) having molecular weight of 500 or less and having no (meth)acryloyl group | Compound having ring structure and one carboxylic acid | Tertiary butylbenzoic acid | 178.2 | 0.010 | | | | | | | | | | |
| | | | Benzoic acid | 122.1 | | 0.0005 | 0.001 | 0.003 | 0.010 | 0.100 | 1.000 | 2.000 | 3.000 | | |
| | | | Methylbenzoic acid | 215.0 | | | | | | | | | | 0.010 | |
| | | | Abietic acid | 302.5 | | | | | | | | | | | |
| | | | Dehydroabietic acid | 300.4 | | | | | | | | | | | |
| | | Compound having ring structure and two or more carboxylic acids | Maleic anhydride | 98.1 | | | | | | | | | | | 0.010 |
| | | | 1,2,3,6-tetrahydrophthalic anhydride | 152.2 | | | | | | | | | | | |
| | | | Phthalic anhydride | 148.1 | | | | | | | | | | | |
| | | | 1,4-cyclohexanedicarboxylic acid | 172.2 | | | | | | | | | | | |
| | | | Isophthalic acid | 166.1 | | | | | | | | | | | |
| | | | Terephthalic acid | 166.1 | | | | | | | | | | | |
| | | | Trimellitic anhydride | 192.1 | | | | | | | | | | | |
| | | Compound having no ring structure and one carboxylic acid | Succinic acid | 118.1 | | | | | | | | | | | |
| | | | Stearic acid | 284.5 | | | | | | | | | | | |
| | | | Oleic acid | 282.5 | | | | | | | | | | | |
| | | | Linoleic acid | 280.5 | | | | | | | | | | | |
| | Compound having molecular weight of 500 or less and having no (meth)acryloyl group and no carboxyl group | | Neopentyl glycol | 104.1 | | | | | | | | | | | |
| | | | Benzene sulfonic acid | 158.2 | | | | | | | | | | | |
| | (Meth)acrylate compound (A) | | MIRAMER M600 | | | | | | | | | | | | |
| | | | MIRAMER M410 | | 30.000 | 30.000 | 30.000 | 30.000 | 30.000 | 30.000 | 30.000 | 30.000 | 30.000 | 30.000 | 30.000 |
| | | | LAROMER LR8863 | | 9.890 | 9.8995 | 9.899 | 9.897 | 9.890 | 9.800 | 8.900 | 7.900 | 6.900 | 9.890 | 9.890 |
| | | | ETERMER 2381 | | | | | | | | | | | | |
| | | | EBECRYL OTA480 | | | | | | | | | | | | |
| | | | TPGDA | | | | | | | | | | | | |
| | Resin (C) | | DAISO DAP A varnish | | 35.000 | 35.000 | 35.000 | 35.000 | 35.000 | 35.000 | 35.000 | 35.000 | 35.000 | 35.000 | 35.000 |
| | | | Petrotack 90 varnish | | | | | | | | | | | | |
| | Colorant (D) | | Carbon black | | 15.000 | 15.000 \| | 15.000 | 15.000 | 15.000 | 15.000 | 15.000 | 15.000 | 15.000 | 15.000 | 15.000 |
| | Photopolymerization initiator | | Omnirad379EG | | 5.000 | 5.000 | 5.000 | 5.000 | 5.000 | 5.000 | 5.000 | 5.000 | 5.000 | 5.000 | 5.000 |
| | | | KAYACURE DETX-S | | 5.000 | 5.000 | 5.000 | 5.000 | 5.000 | 5.000 | 5.000 | 5.000 | 5.000 | 5.000 | 5.000 |
| | Photopolymerization inhibitor | | TBHQ | | 0.100 | 0.100 | 0.100 | 0.100 | 0.100 | 0.100 | 0.100 | 0.100 | 0.100 | 0.100 | 0.100 |
| | Total | | | | 100.000 | 100.000 | 100.000 | 100.000 | 100.000 | 100.000 | 100.000 | 100.000 | 100.000 | 100.000 | 100.000 |
| Amount contained (mass%) of carboxylic acid or carboxylic acid anhydride (B) having molecular weight of 500 or less and having no (meth)acryloyl group relative to total amount of composition | | | | | 0.0100 | 0.0005 | 0.0010 | 0.0030 | 0.0100 | 0.1000 | 1.0000 | 2.0000 | 3.0000 | 0.0100 | 0.0100 |
| Amount contained (mass%) of resin (C) relative to total amount of composition | | | | | 12.250 | 12.250 | 12.250 | 12.250 | 12.250 | 12.250 | 12.250 | 12.250 | 12.250 | 12.250 | 12.250 |
| Evaluation | | | Dot gain | | 5 | 2 | 4 | 5 | 5 | 5 | 5 | 4 | 3 | 5 | 5 |
| | | | Fluidity | | 4 | 4 | 4 | 4 | 4 | 4 | 4 | 4 | 4 | 4 | 4 |

**[Table 1-1]**

| Table 1 (continued 1) | | | | | | | | | | | | | | | |
|---|---|---|---|---|---|---|---|---|---|---|---|---|---|---|---|
| | | | | Mw | Example 12 | Example 13 | Example 14 | Example 15 | Example 16 | Example 171 | Example 18 | Example 19 | Example 20 | Example 21 | Example 22 |
| Composition | Carboxylic acid or carboxylic acid anhydride (B) having molecular weight of 500 or less and having no (meth)acryloyl group | Compound having ring structure and one carboxylic acid | Tertiary butylbenzoic acid | 178.2 | | | | | | | | | | | |
| | | | Benzoic acid | 122.1 | | | | | | | | | | | |
| | | | Methylbenzoic acid | 215.0 | | | | | | | | | | | |
| | | | Abietic acid | 302.5 | | | | | | | | | | | |
| | | | Dehydroabietic acid | 300.4 | | | | | | | | | | | |
| | | Compound having ring structure and two or more carboxylic acids | Maleic anhydride | 98.1 | | | | | | | | | | | |
| | | | 1,2,3,6-tetrahydrophthalic anhydride | 152.2 | 0.001 | 0.003 | 0.010 | 0.100 | 2.000 | 3.000 | | | | | |
| | | | Phthalic anhydride | 148.1 | | | | | | | 0.001 | 0.003 | 0.010 | 0.100 | 2.000 |
| | | | 1,4-cyclohexanedicarboxylic acid | 172.2 | | | | | | | | | | | |
| | | | Isophthalic acid | 166.1 | | | | | | | | | | | |
| | | | Terephthalic acid | 166.1 | | | | | | | | | | | |
| | | | Trimellitic anhydride | 192.1 | | | | | | | | | | | |
| | | Compound having no ring structure and one carboxylic acid | Succinic acid | 118.1 | | | | | | | | | | | |
| | | | Stearic acid | 284.5 | | | | | | | | | | | |
| | | | Oleic acid | 282.5 | | | | | | | | | | | |
| | | | Linoleic acid | 280.5 | | | | | | | | | | | |
| | Compound having molecular weight of 500 or less and having no (meth)acryloyl group and no carboxyl group | | Neopentyl glycol | 104.1 | | | | | | | | | | | |
| | | | Benzene sulfonic acid | 158.2 | | | | | | | | | | | |
| | (Meth)acrylate compound (A) | | MIRAMER M600 | | | | | | | | | | | | |
| | | | MIRAMER M410 | | 30.000 | 30.000 | 30.000 | 30.000 | 30.000 | 30.000 | 30.000 | 30.000 | 30.000 | 30.000 | 30.000 |
| | | | LAROMER LR8863 | | 9.899 | 9.897 | 9.890 | 9.800 | 7.900 | 6.900 | 9.899 | 9.897 | 9.890 | 9.800 | 7.900 |
| | | | ETERMER 2381 | | | | | | | | | | | | |
| | | | EBECRYL OTA480 | | | | | | | | | | | | |
| | | | TPGDA | | | | | | | | | | | | |
| | Resin (C) | | DAISO DAP A varnish | | 35.000 | 35.000 | 35.000 | 35.000 | 35.000 | 35.000 | 35.000 | 35.000 | 35.000 | 35.000 | 35.000 |
| | | | Petrotack 90 varnish | | | | | | | | | | | | |
| | Colorant (D) | | Carbon black | | 15.000 | 15.000 | 15.000 | 15.000 | 15.000 | 15.000 | 15.000 | 15.000 | 15.000 | 15.000 | 15.000 |
| | Photopolymerization initiator | | Omnirad379EG | | 5.000 | 5.000 | 5.000 | 5.000 | 5.000 | 5.000 | 5.000 | 5.000 | 5.000 | 5.000 | 5.000 |
| | | | KAYACURE DETX-S | | 5.000 | 5.000 | 5.000 | 5.000 | 5.000 | 5.000 | 5.000 | 5.000 | 5.000 | 5.000 | 5.000 |
| | Photopolymerization inhibitor | | TBHQ | | 0.100 | 0.100 | 0.100 | 0.100 | 0.100 | 0.100 | 0.100 | 0.100 | 0.100 | 0.100 | 0.100 |
| | Total | | | | 100.000 | 100.000 | 100.000 | 100.000 | 100.000 | 100.000 | 100.000 | 100.000 | 100.000 | 100.000 | 100.000 |
| Amount contained (mass%) of carboxylic acid or carboxylic acid anhydride (B) having molecular weight of 500 or less and having no (meth)acryloyl group relative to total amount of composition | | | | | 0.0010 | 0.0030 | 0.0100 | 0.1000 | 2.0000 | 3.0000 | 0.0010 | 0.0030 | 0.0100 | 0.1000 | 2.0000 |
| Amount contained (mass%) of resin (C) relative to total amount of composition | | | | | 12.250 | 12.250 | 12.250 | 12.250 | 12.250 | 12.250 | 12.250 | 12.250 | 12.250 | 12.250 | 12.250 |
| Evaluation | | | Dot gain | | 4 | 5 | 5 | 5 | 4 | 3 | 4 | 5 | 5 | 5 | 4 |
| | | | Fluidity | | 4 | 4 | 4 | 4 | 4 | 3 | 4 | 4 | 4 | 4 | 4 |

**[Table 1-2]**

| **Table 1 (continued 2)** | | | | | | | | | | | | | | | |
|---|---|---|---|---|---|---|---|---|---|---|---|---|---|---|---|
| | | | | Mw | Example 23 | Example 24 Example 25 | | Example 26 | Example 27 | Example 28 | Example 29 | Example 30 | Example 31 Example 32 | | Example 33 |
| Composition | Carboxylic acid or carboxylic acid anhydride (B) having molecular weight of 500 or less and having no (meth)acryloyl group | Compound having ring structure and one carboxylic acid | Tertiary butylbenzoic acid | 178.2 | | | | | | | | | | | |
| | | | Benzoic acid | 122.1 | | | | | | | | | | | |
| | | | Methylbenzoic acid | 215.0 | | | | | | | | | | | |
| | | | Abietic acid | 302.5 | | | | | 0.001 | 0.003 | 0.010 | 0.100 | 2.000 | 3.000 | |
| | | | Dehydroabietic acid | 300.4 | | | | | | | | | | | 0.001 |
| | | Compound having ring structure and two or more carboxylic acids | Maleic anhydride | 98.1 | | | | | | | | | | | |
| | | | 1,2,3,6-tetrahydrophthalic anhydride | 152.2 | | | | | | | | | | | |
| | | | Phthalic anhydride | 148.1 | 3.000 | | | | | | | | | | |
| | | | 1,4-cyclohexanedicarboxylic acid | 172.2 | | 0.010 | | | | | | | | | |
| | | | Isophthalic acid | 166.1 | | | 0.010 | | | | | | | | |
| | | | Terephthalic acid | 166.1 | | | | 0.010 | | | | | | | |
| | | | Trimellitic anhydride | 192.1 | | | | | | | | | | | |
| | | Compound having no ring structure and one carboxylic acid | Succinic acid | 118.1 | | | | | | | | | | | |
| | | | Stearic acid | 284.5 | | | | | | | | | | | |
| | | | Oleic acid | 282.5 | | | | | | | | | | | |
| | | | Linoleic acid | 280.5 | | | | | | | | | | | |
| | Compound having molecular weight of 500 or less and having no (meth)acryloyl group and no carboxyl group | | Neopentyl glycol | 104.1 | | | | | | | | | | | |
| | | | Benzene sulfonic acid | 158.2 | | | | | | | | | | | |
| | (Meth)acrylate compound (A) | | MIRAMER M600 | | | | | | | | | | | | |
| | | | MIRAMER M410 | | 30.000 | 30.000 | 30.000 | 30.000 | 30.000 | 30.000 | 30.000 | 30.000 | 30.000 | 30.000 | 30.000 |
| | | | LAROMER LR8863 | | 6.900 | 9.890 | 9.890 | 9.890 | 9.899 | 9.897 | 9.890 | 9.800 | 7.900 | 6.900 | 9.899 |
| | | | ETERMER 2381 | | | | | | | | | | | | |
| | | | EBECRYL OTA480 | | | | | | | | | | | | |
| | | | TPGDA | | | | | | | | | | | | |
| | Resin (C) | | DAISO DAP A varnish | | 35.000 | 35.000 | 35.000 | 35.000 | 35.000 | 35.000 | 35.000 | 35.000 | 35.000 | 35.000 | 35.000 |
| | | | Petrotack 90 varnish | | | | | | | | | | | | |
| | Colorant (D) | | Carbon black | | 15.000 | 15.000 | 15.000 | 15.000 | 15.000 | 15.000 | 15.000 | 15.000 | 15.000 | 15.000 | 15.000 |
| | Photopolymerization initiator | | Omnirad379EG | | 5.000 | 5.000 | 5.000 | 5.000 | 5.000 | 5.000 | 5.000 | 5.000 | 5.000 | 5.000 | 5.000 |
| | | | KAYACURE DETX-S | | 5.000 | 5.000 | 5.000 | 5.000 | 5.000 | 5.000 | 5.000 | 5.000 | 5.000 | 5.000 | 5.000 |
| | Photopolymerization inhibitor | | TBHQ | | 0.100 | 0.100 | 0.100 | 0.100 | 0.100 | 0.100 | 0.100 | 0.100 | 0.100 | 0.100 | 0.100 |
| | Total | | | | 100.000 | 100.000 | 100.000 | 100.000 | 100.000 | 100.000 | 100.000 | 100.000 | 100.000 | 100.000 | 100.000 |
| Amount contained (mass%) of carboxylic acid or carboxylic acid anhydride (B) having molecular weight of 500 or less and having no (meth)acryloyl group relative to total amount of composition | | | | | 3.0000 | 0.0100 | 0.0100 | 0.0100 | 0.0010 | 0.0030 | 0.0100 | 0.1000 | 2.0000 | 3.0000 | 0.0010 |
| Amount contained (mass%) of resin (C) relative to total amount of composition 12.250 | | | | | | 12.250 | 12.250 | 12.250 | 12.250 | 12.250 | 12.250 | 12.250 | 12.250 | 12.250 | 12.250 |
| Evaluation | | | Dot gain | | 3 | 5 | 5 | 5 | 4 | 5 | 5 | 5 | 4 | 3 | 4 |
| | | | Fluidity | | 3 | 4 | 4 | 4 | 4 | 4 | 4 | 4 | 4 | 3 | 4 |

**[Table 1-3]**

| Table 1 (continued 3) | | | | | | | | | | | | | | | |
|---|---|---|---|---|---|---|---|---|---|---|---|---|---|---|---|
| | | | | Mw | Example 34 | Example 35 | Example 36 | Example 37 | Example 38 | Example 39 | Example 40 | Example 41 | Example 42 | Example 43 | Example 44 |
| Composition | Carboxylic acid or carboxylic acid anhydride (B) having molecular weight of 500 or less and having no (meth)acryloyl group | Compound having ring structure and one carboxylic acid | Tertiary butylbenzoic acid | 178.2 | | | | | | | | | | | |
| | | | Benzoic acid | 122.1 | | | | | | | | | | | 0.010 |
| | | | Methylbenzoic acid | 215.0 | | | | | | | | | | | |
| | | | Abietic acid | 302.5 | | | | | | | | | | | |
| | | | Dehydroabietic acid | 300.4 | 0.003 | 0.010 | 0.100 | 2.000 | 3.000 | | | | | | |
| | | Compound having ring structure and two or more carboxylic acids | Maleic anhydride | 98.1 | | | | | | | | | | | |
| | | | 1,2,3,6-tetrahydrophthalic anhydride | 152.2 | | | | | | | | | | | |
| | | | Phthalic anhydride | 148.1 | | | | | | | | | | | |
| | | | 1,4-cyclohexanedicarboxylic acid | 172.2 | | | | | | | | | | | |
| | | | Isophthalic acid | 166.1 | | | | | | | | | | | |
| | | | Terephthalic acid | 166.1 | | | | | | | | | | | |
| | | | Trimellitic anhydride | 192.1 | | | | | | 0.010 | | | | | |
| | | Compound having no ring structure and one carboxylic acid | Succinic acid | 118.1 | | | | | | | 0.010 | | | | |
| | | | Stearic acid | 284.5 | | | | | | | | 0.010 | | | |
| | | | Oleic acid | 282.5 | | | | | | | | | 0.010 | | |
| | | | Linoleic acid | 280.5 | | | | | | | | | | 0.010 | |
| | Compound having molecular weight of 500 or less and having no (meth)acryloyl group and no carboxyl group | | Neopentyl glycol | 104.1 | | | | | | | | | | | |
| | | | Benzene sulfonic acid | 158.2 | | | | | | | | | | | |
| | (Meth)acrylate compound (A) | | MIRAMER M600 | | | | | | | | | | | | |
| | | | MIRAMER M410 | | 30.000 | 30.000 | 30.000 | 30.000 | 30.000 | 30.000 | 30.000 | 30.000 | 30.000 | 30.000 | 59.000 |
| | | | LAROMER LR8863 | | 9.897 | 9.890 | 9.800 | 7.900 | 6.900 | 9.890 | 9.890 | 9.890 | 9.890 | 9.890 | 9.890 |
| | | | ETERMER 2381 | | | | | | | | | | | | |
| | | | EBECRYL OTA480 | | | | | | | | | | | | |
| | | | TPGDA | | | | | | | | | | | | |
| | Resin (C) | | DAISO DAP A varnish | | 35.000 | 35.000 | 35.000 | 35.000 | 35.000 | 35.000 | 35.000 | 35.000 | 35.000 | 35.000 | 6.000 |
| | | | Petrotack 90 varnish | | | | | | | | | | | | |
| | Colorant (D) | | Carbon black | | 15.000 | 15.000 | 15.000 | 15.000 | 15.000 | 15.000 | 15.000 | 15.000 | 15.000 | 15.000 | 15.000 |
| | Photopolymerization initiator | | Omnirad379EG | | 5.000 | 5.000 | 5.000 | 5.000 | 5.000 | 5.000 | 5.000 | 5.000 | 5.000 | 5.000 | 5.000 |
| | | | KAYACURE DETX-S | | 5.000 | 5.000 | 5.000 | 5.000 | 5.000 | 5.000 | 5.000 | 5.000 | 5.000 | 5.000 | 5.000 |
| | Photopolymerization inhibitor | | TBHQ | | 0.100 | 0.100 | 0.100 | 0.100 | 0.100 | 0.100 | 0.100 | 0.100 | 0.100 | 0.100 | 0.100 |
| | Total | | | | 100.000 | | | 100.000 | 100.000 | 100.000 | 100.000 | 100.000 | 100.000 | 100.000 | 100.000 |
| Amount contained (mass%) of carboxylic acid or carboxylic acid anhydride (B) having molecular weight of 500 or less and having no (meth)acryloyl group relative to total amount of composition | | | | | 0.0030 | 0.0100 | 0.1000 | 2.0000 | 3.0000 | 0.0100 | 0.0100 | 0.0100 | 0.0100 | 0.0100 | 0.0100 |
| Amount contained (mass%) of resin (C) relative to total amount of composition | | | | | 12.250 | 12.250 | 12.250 | 12.250 | 12.250 | 12.250 | 12.250 | 12.250 | 12.250 | 12.250 | 2.100 |
| Evaluation | | | Dot gain | | 5 | 5 | 5 | 4 | 3 | 5 | 4 | 4 | 4 | 4 | 5 |
| | | | Fluidity | | 4 | 4 | 4 | 4 | 3 | 4 | 4 | 4 | 4 | 4 | 3 |

**[Table 1-4]**

| Table 1 (continued 4) | | | | | | | | | | | | | | | |
|---|---|---|---|---|---|---|---|---|---|---|---|---|---|---|---|
| | | | | Mw | Example 45 | Example 46 | Example 47 | Example 48 | Example 49 | Example 50 | Example 51 | Example 52 | Example 53 | Example 54 | Example 55 |
| Composition | Carboxylic acid or carboxylic acid anhydride (B) having molecular weight of 500 or less and having no (meth)acryloyl group | Compound having ring structure and one carboxylic acid | Tertiary butylbenzoic acid | 178.2 | | | | | | | | | | | |
| | | | Benzoic acid | 122.1 | | | | | 0.010 | | | 0.010 | | | |
| | | | Methylbenzoic acid | 215.0 | | | | | | | | | | | |
| | | | Abietic acid | 302.5 | | 0.005 | | 0.0025 | | | | | | | |
| | | | Dehydroabietic acid | 300.4 | | | 0.005 | 0.0025 | | | 0.010 | | | | |
| | | Compound having ring structure and two or more carboxylic acids | Maleic anhydride | 98.1 | | | | | | | | | | | |
| | | | 1,2,3,6-tetrahydrophthalic anhydride | 152.2 | 0.010 | 0.005 | 0.005 | 0.0025 | | 0.010 | | | 0.010 | | |
| | | | Phthalic anhydride | 148.1 | | | | 0.0025 | | | | | | 0.010 | |
| | | | 1,4-cyclohexanedicarboxylic acid | 172.2 | | | | | | | | | | | 0.010 |
| | | | Isophthalic acid | 166.1 | | | | | | | | | | | |
| | | | Terephthalic acid | 166.1 | | | | | | | | | | | |
| | | | Trimellitic anhydride | 192.1 | | | | | | | | | | | |
| | | Compound having no ring structure and one carboxylic acid | Succinic acid | 118.1 | | | | | | | | | | | |
| | | | Stearic acid | 284.5 | | | | | | | | | | | |
| | | | Oleic acid | 282.5 | | | | | | | | | | | |
| | | | Linoleic acid | 280.5 | | | | | | | | | | | |
| | Compound having molecular weight of 500 or less and having no (meth)acryloyl group and no carboxyl group | | Neopentyl glycol | 104.1 | | | | | | | | | | | |
| | | | Benzene sulfonic acid | 158.2 | | | | | | | | | | | |
| | (Meth)acrylate compound (A) | | MIRAMER M600 | | | | | | | | | | | | |
| | | | MIRAMER M410 | | 0.000 | 30.000 | 30.000 | 30.000 | 60.000 | 14.890 | 30.000 | 50.000 | 50.000 | 50.000 | 50.000 |
| | | | LAROMER LR8863 | | 0.890 | 9.890 | 9.890 | 9.890 | 7.890 | | 9.890 | 4.890 | 4.890 | 4.890 | 4.890 |
| | | | ETERMER 2381 | | | | | | | | | | | | |
| | | | EBECRYL OTA480 | | | | | | | | | | | | |
| | | | TPGDA | | | | | | | | | | | | |
| | Resin (C) | | DAISO DAP A varnish | | 74.000 | 35.000 | 35.000 | 35.000 | | | | 35.000 | 35.000 | 35.000 | 35.000 |
| | | | Petrotack 90 varnish | | | | | | 7.000 | 60.000 | 35.000 | | | | |
| | Colorant (D) | | Carbon black | | 15.000 | 15.000 | 15.000 | 15.000 | 15.000 | 15.000 | 15.000 | | | | |
| | Photopolymerization initiator | | Omnirad379EG | | 5.000 | 5.000 | 5.000 | 5.000 | 5.000 | 5.000 | 5.000 | 5.000 | 5.000 | 5.000 | 5.000 |
| | | | KAYACURE DETX-S | | 5.000 | 5.000 | 5.000 | 5.000 | 5.000 | 5.000 | 5.000 | 5.000 | 5.000 | 5.000 | 5.000 |
| | Photopolymerization inhibitor | | TBHQ | | 0.100 | 0.100 | 0.100 | 0.100 | 0.100 | 0.100 | 0.100 | 0.100 | 0.100 | 0.100 | 0.100 |
| | Total | | | | 100.000 | 100.000 | 100.000 | 100.000 | 100.000 | 100.000 | 100.000 | 100.000 | 100.000 | 100.000 | 100.000 |
| Amount contained (mass%) of carboxylic acid or carboxylic acid anhydride (B) having molecular weight of 500 or less and having no (meth)acryloyl group relative to total amount of composition | | | | | 0.0100 | 0.0100 | 0.0100 | 0.0100 | 0.0100 | 0.0100 | 0.0100 | 0.0100 | 0.0100 | 0.0100 | 0.0100 |
| Amount contained (mass%) of resin (C) relative to total amount of composition | | | | | 25.900 | 12.250 | 12.250 | 12.250 | 3.500 | 30.000 | 17.500 | 12.250 | 12.250 | 12.250 | 12.250 |
| Evaluation | | | Dot gain | | 5 | 5 | 5 | 5 | 5 | 5 | 5 | 5 | 5 | 5 | 5 |
| | | | Fluidity | | 4 | 4 | 4 | 4 | 4 | 4 | 4 | 4 | 4 | 4 | 4 |

**[Table 1-5]**

| Table 1 (continued 5) | | | | | | | | | | | | | | | |
|---|---|---|---|---|---|---|---|---|---|---|---|---|---|---|---|
| | | | | Mw | Example 56 | Example 57 | Example 58 | Example 59 | Example 60 | Example 61 | Example 62 | Example 63 | Example 64 | Example 65 | Example 66 |
| Composition | Carboxylic acid or carboxylic acid anhydride (B) having molecular weight of 500 or less and having no (meth)acryloyl group | Compound having ring structure and one carboxylic acid | Tertiary butylbenzoic acid | 178.2 | | | | | | | | | | | |
| | | | Benzoic acid | 122.1 | | | | | | | | | | | |
| | | | Methylbenzoic acid | 215.0 | | | | | | | | | | | |
| | | | Abietic acid | 302.5 | 0.010 | | | 0.010 | | | | | | | |
| | | | Dehydroabietic acid | 300.4 | | 0.010 | | | 0.010 | | | | | | |
| | | Compound having ring structure and two or more carboxylic acids | Maleic anhydride | 98.1 | | | | | | | | | | | |
| | | | 1,2,3,6-tetrahydrophthalic anhydride | 152.2 | | | 0.010 | | | 0.010 | 0.010 | 0.010 | 0.010 | 0.010 | 0.010 |
| | | | Phthalic anhydride | 148.1 | | | | | | | | | | | |
| | | | 1,4-cyclohexanedicarboxylic acid | 172.2 | | | | | | | | | | | |
| | | | Isophthalic acid | 166.1 | | | | | | | | | | | |
| | | | Terephthalic acid | 166.1 | | | | | | | | | | | |
| | | | Trimellitic anhydride | 192.1 | | | | | | | | | | | |
| | | Compound having no ring structure and one carboxylic acid | Succinic acid | 118.1 | | | | | | | | | | | |
| | | | Stearic acid | 284.5 | | | | | | | | | | | |
| | | | Oleic acid | 282.5 | | | | | | | | | | | |
| | | | Linoleic acid | 280.5 | | | | | | | | | | | |
| | Compound having molecular weight of 500 or less and having no (meth)acryloyl group and no carboxyl group | | Neopentyl glycol | 104.1 | | | | | | | | | | | |
| | | | Benzene sulfonic acid | 158.2 | | | | | | | | | | | |
| | (Meth)acrylate compound (A) | | MIRAMER M600 | | | | | | | | 39.890 | | | | |
| | | | MIRAMER M410 | | 50.000 | 50.000 | 70.000 | 70.000 | 70.000 | 88.000 | | 39.890 | | | |
| | | | LAROMER LR8863 | | 4.890 | 4.890 | 4.890 | 4.890 | 4.890 | 1.890 | | | 39.890 | | |
| | | | ETERMER 2381 | | | | | | | | | | | 39.890 | |
| | | | EBECRYL OTA480 | | | | | | | | | | | | 39.890 |
| | | | TPGDA | | | | | | | | | | | | |
| | Resin (C) | | DAISO DAP A varnish | | 35.000 | 35.000 | | | | | 35.000 | 35.000 | 35.000 | 35.000 | 35.000 |
| | | | Petrotack 90 varnish | | | | | | | | | | | | |
| | Colorant (D) | | Carbon black | | | | 15.000 | 15.000 | 15.000 | | 15.000 | 15.000 | 15.000 | 15.000 | 15.000 |
| | Photopolymerization initiator | | Omnirad379EG | | 5.000 | 5.000 | 5.000 | 5.000 | 5.000 | 5.000 | 5.000 | 5.000 | 5.000 | 5.000 | 5.000 |
| | | | KAYACURE DETX-S | | 5.000 | 5.000 | 5.000 | 5.000 | 5.000 | 5.000 | 5.000 | 5.000 | 5.000 | 5.000 | 5.000 |
| | Photopolymerization inhibitor | | TBHQ | | 0.100 | 0.100 | 0.100 | 0.100 | 0.100 | 0.100 | 0.100 | 0.100 | 0.100 | 0.100 | 0.100 |
| | Total | | | | 100.000 | 100.000 | 100.000 | 100.000 | 100.000 | 100.000 | 100.000 | 100.000 | 100.000 | \| 100.000 | 100.000 |
| Amount contained (mass%) of carboxylic acid or carboxylic acid anhydride (B) having molecular weight of 500 or less and having no (meth)acryloyl group relative to total amount of composition | | | | | 0.0100 | 0.0100 | 0.0100 | 0.0100 | 0.0100 | 0.0100 | 0.0100 | 0.0100 | 0.0100 | 0.0100 | 0.0100 |
| Amount contained (mass%) of resin (C) relative to total amount of composition | | | | | 12.250 | 12.250 | 0.000 | 0.000 | 0.000 | 0.000 | 12.250 | 12.250 | 12.250 | 12.250 | 12.250 |
| Evaluation | | | Dot gain | | 5 | 5 | 5 | 5 | 5 | 5 | 5 | 5 | 5 | 5 | 5 |
| | | | Fluidity | | 4 | 4 | 2 | 2 | 2 | 2 | 4 | 4 | 4 | 4 | 4 |

**[Table 1-6]**

| **Table 1 (continued 8)** | | | | | | | | | | | | | | |
|---|---|---|---|---|---|---|---|---|---|---|---|---|---|---|
| | | | | Mw | Example 67 | Example 68 | Comparative Example 1 | Comparative Example 2 | Comparative Example 3 | Comparative Example 4 | Comparative Example 5 | Comparative Example 6 | Comparative Example 7 | Comparative Example 8 |
| position Composition | Carboxylic acid or carboxylic acid anhydride (B) having molecular weight of 500 or less and having no (meth)acryloyl group | Compound having ring structure and one carboxylic acid | Tertiary butylbenzoic acid | 178.2 | | | | | | | | | | |
| | | | Benzoic acid | 122.1 | | | | | | 3.500 | | | | |
| | | | Methylbenzoic acid | 215.0 | | | | | | | | | | |
| | | | Abietic acid | 302.5 | | | | | | | | 3.500 | | |
| | | | Dehydroabietic acid | 300.4 | | | | | | | | | | |
| | | Compound having ring structure and two or more carboxylic acids | Maleic anhydride | 98.1 | | | | | | | | | | |
| | | | 1,2,3,6-tetrahydrophthalic anhydride | 152.2 | 0.010 | 0.010 | | | | | 3.500 | | | |
| | | | Phthalic anhydride | 148.1 | | | | | | | | | | |
| | | | 1,4-cyclohexanedicarboxylic acid | 172.2 | | | | | | | | | | |
| | | | Isophthalic acid | 166.1 | | | | | | | | | | |
| | | | Terephthalic acid | 166.1 | | | | | | | | | | |
| | | | Trimellitic anhydride | 192.1 | | | | | | | | | 3.500 | |
| | | Compound having no ring structure and one carboxylic acid | Succinic acid | 118.1 | | | | | | | | | | 3.500 |
| | | | Stearic acid | 284.5 | | | | | | | | | | |
| | | | Oleic acid | 282.5 | | | | | | | | | | |
| | | | Linoleic acid | 280.5 | | | | | | | | | | |
| | Compound having molecular weight of 500 or less and having no (meth)acryloyl group and no carboxyl group | | Neopentyl glycol | 104.1 | | | | 0.010 | | | | | | |
| | | | Benzene sulfonic acid | 158.2 | | | | | 0.010 | | | | | |
| | (Meth)acrylate compound (A) | | MIRAMER M600 | | | | | | | | | | | |
| | | | MIRAMER M410 | | | | 30.000 | 30.000 | 30.000 | 30.000 | 30.000 | 30.000 | 30.000 | 30.000 |
| | | | LAROMER LR8863 | | | 5.890 | 9.900 | 9.890 | 9.890 | 6.400 | 6.400 | 6.400 | 6.400 | 6.400 |
| | | | ETERMER 2381 | | | | | | | | | | | |
| | | | EBECRYL OTA480 | | | | | | | | | | | |
| | | | TPGDA | | 39.890 | | | | | | | | | |
| | Resin (C) | | DAISO DAP A vamish | | 35.000 | 34.000 | 35.000 | 35.000 | 35.000 | 35.000 | 35.000 | 35.000 | 35.000 | 35.000 |
| | | | Petrotack 90 vamish | | | | | | | | | | | |
| | Colorant (D) | | Carbon black | | 15.000 | 40.000 | 15.000 | 15.000 | 15.000 | 15.000 | 15.000 | 15.000 | 15.000 | 15.000 |
| | Photopolymerization Initiator | | Omnirad379EG | | 5.000 | 10.000 | 5.000 | 5.000 | 5.000 | 5.000 | 5.000 | 5.000 | 5.000 | 5.000 |
| | | | KAYACURE DETX-S | | 5.000 | 10.000 | 5.000 | 5.000 | 5.000 | 5.000 | 5.000 | 5.000 | 5.000 | 5.000 |
| | Photopolymerization inhibitor | | TBHQ | | 0.100 | 0.100 | 0.100 | 0.100 | 0.100 | 0.100 | 0.100 | 0.100 | 0.100 | 0.100 |
| | Total | | | | 100.000 | 100.000 | 100.000 | 100.000 | 100.000 | 100.000 | 100.000 | 100.000 | 100.000 | 100.000 |
| Amount Amount contained (mass%) of carboxylic acid or carboxylic acid anhydride (B) having molecular weight of 500 or less and having no (meth)acryloyl group relative to total amount of composition | | | | | 0.0100 | 0.0100 | 0.0000 | 0.0000 | 0.0000 | 3.5000 | 3.5000 | 3.5000 | 3.5000 | 3.5000 |
| Amount contained (mass%) of resin (C) relative to total amount of composition | | | | | 12.250 | 11.900 | 12.250 | 12.250 | 12.250 | 12.250 | 12.250 | 12.250 | 12.250 | 12.250 |
| Evaluation | | | Dot gain | | 4 | 5 | 1 | 1 | 1 | 2 | 2 | 2 | 2 | 1 |
| | | | Fluidity | | 4 | 3 | 4 | 4 | 4 | 1 | 1 | 1 | 1 | 1 |

Details of materials listed in Table 1 are given below.

### <(Meth)acrylate compound (A)>

· MIRAMER M600: dipentaerythritol hexaacrylate, manufactured by Miwon Specialty Chemical
   Co., Ltd.
· MIRAMER M410: ditrimethylolpropane tetraacrylate, manufactured by Miwon Specialty Chemical
   Co., Ltd.
· LAROMER LR8863: trimethylolpropane EO-modified (3) triacrylate, manufactured by BASF Corporation
· ETERMER 2381: trimethylolpropane PO-modified (3) triacrylate, manufactured by Eternal Materials Co., Ltd.
· EBECRYL OTA480: glycerol PO-modified (3) triacrylate, manufactured by DAICEL-ALLNEX LTD.
· TPGDA: tripropylene glycol diacrylate, manufactured by DAICEL-ALLNEX LTD.

### <Resin (C)>

DAISO DAP A varnish: prepared in varnish production example 1
Petrotack 90 varnish: prepared in varnish production example 2

### <Colorant (D)>

· Carbon black: carbon black MA11 manufactured by Mitsubishi Chemical Group Corporation

### <Photopolymerization initiator>

· Omnirad379EG: 2-dimethylamino-2-(4-methylbenzyl)-1-(4-morpholine-4-yl-phenyl)-butane-1-one manufactured by iGM RESINS Corporation
· KAYACURE DETX-S: 2,4-diethylthioxanthone manufactured by Nippon Kayaku Co., Ltd.

### <Photopolymerization inhibitor>

· TBHQ: phenol-based compound, 2-t-butylhydroquinone manufactured by Seiko Chemical Co., Ltd.

### <Evaluation of active energy ray-curable compositions>

Examples and comparative examples were evaluated according to the following methods.

### <Measurement method of dot gain>

Printing was performed at a speed of 10,000 sheets/hour under the following conditions on an Offset Printing Press LITHRONE L426 (Komori Corporation). Comparison was performed on how much 50% dots on a plate expanded (dot gain) when printing 5,000 sheets continuously. A dot gain evaluation of "2" or higher is a level with no practical issues. A dot gain evaluation of "3" or higher is more favorable and provides clear printed matter.

### (Evaluation criteria)

5: dot gain of less than 17%, which is able to provide clear printed matter that greatly exceeds market requirements.
4: dot gain of 17% or more to less than 19%, which is able to provide clear printed matter that sufficiently meets market requirements.
3: dot gain of 19% or more to less than 22%, which is able to provide clear printed matter that is acceptable to the market.
2: dot gain of 22% or more to less than 25%, which is the minimum level acceptable to the market.
1: dot gain of 25% or more, which does not meet the market requirements.

### (Printing conditions)

Printer: LITHRONE26 (Komori Corporation)
Paper: OK Topcoat+ (79.1 g/m²) manufactured by Oji Paper Co., Ltd.
Printing speed: 10,000 sheets/hour
Lamp: metal halide lamp (output 120 W/cm, 3 lamps used) manufactured by EYE GRAPHICS COMPANY

### <Evaluation method of flowability>

An amount of 2.1 cc of ink was placed on a metal plate having a semispherical hollow, left to stand for 2 minutes, and then tilted at 60 degrees for 10 minutes. The length of the ink flowed was measured, and the evaluation was made based on the following evaluation criteria. The higher the value, the less the ink shrinks and the better the fluidity. An evaluation of "2" or higher is a level with no practical issues. An evaluation of "3" or higher is preferable.

### (Evaluation criteria)

4: 50 mm or more
3: 35 mm or more to less than 50 mm
2: 20 mm or more to less than 35 mm
1: less than 20 mm

As listed in Table 1, the dot gain and fluidity of examples 1 to 68 were good with no practical issues. Further, the dot gain was particularly good in examples containing 3% by mass or less of a carboxylic acid compound having a ring structure per molecule.

In contrast, comparative example 1, which does not contain a carboxylic acid compound, had poor dot gain. Comparative examples 2 and 3, although having a molecular weight of 500 or less, had poor dot gain because they were not carboxylic acid compounds. As comparative examples 4 to 8 show, when the amount of the carboxylic acid compound added exceeded 3% by mass, the dot gain and fluidity were poor.

## Claims

1. An active energy ray-curable composition, comprising: a (meth)acrylate compound (A); and a carboxylic acid or carboxylic acid anhydride (B) having a molecular weight of 500 or less and having no (meth)acryloyl group, wherein
an amount contained of the carboxylic acid or carboxylic acid anhydride (B) having the molecular weight of 500 or less and having no (meth)acryloyl group is 3% by mass or less relative to a total amount of the composition.

2. The active energy ray-curable composition according to claim 1, wherein the carboxylic acid or carboxylic acid anhydride (B) having the molecular weight of 500 or less and having no (meth)acryloyl group has a cyclic hydrocarbon structure per molecule.

3. The active energy ray-curable composition according to claim 1, wherein the carboxylic acid or carboxylic acid anhydride (B) having a molecular weight of 500 or less and having no (meth)acryloyl group contains one or more selected from the group consisting of a tertiary butylbenzoic acid, a benzoic acid, a methylbenzoic acid, a maleic anhydride, a 1,2,3,6-tetrahydrophthalic anhydride, a phthalic anhydride, a 1,4-cyclohexanedicarboxylic acid, an isophthalic acid, a terephthalic acid, an abietic acid, a dehydroabietic acid, and a trimellitic anhydride.

4. The active energy ray-curable composition according to claim 1, further comprising a resin (C).

5. The active energy ray-curable composition according to claim 1, further comprising a colorant (D).

6. The active energy ray-curable composition according to claim 4, wherein an amount contained of the resin (C) is within a range from 2% to 40% by mass relative to a total amount of the composition.

7. A laminate comprising:
a substrate; and
a layer formed from a cured product of the active energy ray-curable composition according to any one of claims 1 to 6.
